(19)

Europäisches Patentamt
European Patent Office
Office européen des brevets

(11)  **EP 4 442 850 A1**

(12)  **EUROPEAN PATENT APPLICATION**
published in accordance with Art. 153(4) EPC

(43) Date of publication:
**09.10.2024  Bulletin 2024/41**

(21) Application number: **22899802.7**

(22) Date of filing: **16.05.2022**

(51) International Patent Classification (IPC):
*C22C 38/02* (2006.01)     *C22C 38/04* (2006.01)
*C22C 38/08* (2006.01)     *C22C 38/16* (2006.01)
*C22C 38/14* (2006.01)     *C22C 38/06* (2006.01)
*C21D 8/02* (2006.01)      *C21C 7/06* (2006.01)
*C21C 7/00* (2006.01)      *C21C 7/10* (2006.01)

(52) Cooperative Patent Classification (CPC):
C21C 7/00; C21C 7/06; C21C 7/10; C21D 8/02;
C22C 38/02; C22C 38/04; C22C 38/06;
C22C 38/08; C22C 38/14; C22C 38/16; Y02P 10/20

(86) International application number:
**PCT/CN2022/092985**

(87) International publication number:
**WO 2023/097979 (08.06.2023 Gazette 2023/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.12.2021  CN 202111462807**

(71) Applicants:
• **Laiwu Steel Yinshan Section Co., Ltd.**
**Jinan, Shandong 271104 (CN)**
• **Shandong Iron And Steel Company Ltd.**
**Laiwu, Shandong 271104 (CN)**

(72) Inventors:
• **MA, Heng**
**Jinan, Shandong 271104 (CN)**

• **ZHANG, Qingpu**
**Jinan, Shandong 271104 (CN)**
• **WANG, Zhongxue**
**Jinan, Shandong 271104 (CN)**
• **WANG, Tengfei**
**Jinan, Shandong 271104 (CN)**
• **HE, Kang**
**Jinan, Shandong 271104 (CN)**
• **WANG, Yuexiang**
**Jinan, Shandong 271104 (CN)**
• **ZHANG, Pei**
**Jinan, Shandong 271104 (CN)**
• **LI, Jun**
**Jinan, Shandong 271104 (CN)**
• **LI, Yan**
**Jinan, Shandong 271104 (CN)**

(74) Representative: **Bryn Aarflot AS**
**Patent**
**Stortingsgata 8**
**0161 Oslo (NO)**

(54)  **CORROSION-RESISTANT HIGH-STRENGTH STEEL SHEET WELDABLE WITH HIGH HEAT INPUT AND USED FOR OCEAN ENGINEERING, AND PREPARATION METHOD THEREFOR**

(57)    The present application relates to a corrosion-resistant high-strength steel sheet for high heat input welding in marine engineering, and its chemical composition in percentages by mass is as follows: C: 0.06%-0.09%, Si: 0.15%-0.30%, Mn: 1.45%-1.60%, P: ≤ 0.012%, S: ≤ 0.003%, Ni: 0.40%-0.70%, Cu: 0.20%-0.50%, Ti: 0.005%-0.015%, Als: 0.06%-0.09%, with the balance being Fe and other inevitable impurity elements. The corrosion-resistant high-strength steel sheet for high heat input welding in marine engineering provided in the present application is produced with a thickness of 40-60 mm by using TMCP thermo-mechanical controlled rolling and rapid cooling processes. The $KV_2$ (-40°C) of a HAZ is ≥ 47 J following high heat input welding at 160-210 kJ/cm; the steel sheet exhibits excellent low-temperature impact toughness, significantly enhanced resistance to seawater corrosion by ≥ 35% compared with conventional steel for marine engineering, combining the advantages of high strength, good corrosion resistance, compatibility with high heat input welding and low cost.

EP 4 442 850 A1

**Description**

**CROSS REFERENCE TO RELATED APPLICATION**

This application claims the benefit of the priority of Chinese Patent Application No. 202111462807.3, filed on December 2, 2021, the disclosure of which is incorporated herein by reference in its entirety.

**TECHNICAL FIELD**

The present application relates to the technical field of low-alloy steel, in particular to a corrosion-resistant high-strength steel sheet for high heat input welding in marine engineering and a preparation method therefor.

**BACKGROUND**

High-strength steel sheets for marine engineering serve as critical structural materials for advanced marine engineering and construction of high-tech ships. Ultra-high strength and excellent low-temperature toughness are the essential requirements of steel for ships and marine engineering. With the continuous improvement on the safety requirements of the hull structure, the strength of marine steel sheet has been gradually increased from 235 MPa to 315 MPa or even up to 355 MPa, and its quality grade has also been increased from Grade A to Grade E or even up to Grade F. High-strength steel weldable with high heat input is also one of the hotspots for ship and marine engineering equipment manufacturers. In order to improve the welding efficiency and shorten the construction cycle, high heat input welding methods, such as electro-gas welding, submerged-arc welding and electroslag welding etc., are gradually being used. Under the conditions of high heat input welding, especially when the welding heat input is greater than 50 kJ/cm, brittle structures such as grain boundary ferrite and M-A are likely to be formed in the welding heat-affected zone with the increase of welding heat input, and the toughness of the welding heat affected zone will be significantly reduced, thus a locally brittle zone will be formed to compromise the safety of the welded components. In addition to being subjected to interactions from temperature, humidity and chloride ions, ships and various marine engineering equipment are also exposed to the coupling effects of alternating loads such as wind and wave impact during their intended service in the marine environment, rendering them under severe risk of corrosion. In consideration of these aspects, it is of crucial importance for the development of both ships and marine engineering steel to develop marine steel with high strength, corrosion resistance and being weldable with high heat input.

Steel of superior compatibility with high heat input welding has been made available in both patent literature CN102839320A and patent literature CN105256095A. However, the use of element B is necessary for performing microalloying in both patents, and it is known that addition of element B in smelting is quite challenging and susceptibility to segregation is also very likely, causing massive difficulty in the production process.

In patent literature CN102839330A, steel sheet less than 30 mm in thickness was developed by adding such elements as Ni, Cr and Mo, which is capable of adapting to a welding heat input within 40 to 100 kJ/cm; however, the maximum content of Ni, Cr and Mo alloy added was up to 5%, representing a high cost. In patent literature CN102286692A, steel that can withstand high heat input welding and provides satisfactory performance under low temperature was obtained with the use of DQ+T process, but the need for quenching and tempering treatment resulted in a significant increase in the process-related cost. Considering the high cost from using particular components or specific process in the aforementioned patent applications, it appears to be quite unpromising in promoting these two.

In patent literature CN111926259A, a low-alloy steel sheet was obtained by forming rationally well-proportioned fine Ti-X-O dispersions within the steel through the use of the oxide metallurgical technology of Ti, Mg and Zr together with appropriately controlled rolling and controlled cooling processes, which exhibited well-balanced strength and roughness as well as good adaptation to high heat input welding within 100 kJ/cm-200 kJ/cm. However, inadequacies are obvious in terms of its high economic alloy cost and corrosion-resistant property.

**SUMMARY OF THE INVENTION**

The present application provides a corrosion-resistant high-strength steel sheet for high heat input welding in marine engineering as a solution to the deficiencies in the prior art. The steel sheet provided in the present application is well designed to deliver such excellent performances as high strength, outstanding resistance to marine corrosion and being weldable with high heat input.

The following technical schemes have been properly employed in the present application to achieve the above purposes:
The present application provides a corrosion-resistant high-strength steel sheet for high heat input welding in marine engineering, the composition of which is as follows in percentages by mass: C: 0.06%-0.09%, Si: 0.15%-0.30%, Mn:

1.45%-1.60%, P: ≤ 0.012%, S: ≤ 0.003%, Ni: 0.40%-0.70%, Cu: 0.20%-0.50%, Ti: 0.005%-0.015%, Als: 0.06%-0.09%, with the balance being Fe and other inevitable impurity elements including CEV ≤ 0.40% and Pcm ≤ 0.23%.

Where,

$$CEV = C + Mn/6 + (Cr+Mo+V)/5 + (Ni+Cu)/15,$$

$$Pcm = C + Si/30 + Mn/20 + Cu/20 + Ni/60 + Cr/20 + Mo/15 + V/10 + 5B。$$

The contents of alloy elements such as Ni and Cu are rationally designed in the present application to produce effective strengthening effect, improve the low-temperature toughness and welding performance and significantly enhance the corrosion-resistant performance of the steel sheet.

In the above-mentioned corrosion-resistant high-strength steel sheet for high heat input welding in marine engineering, as a preferred embodiment and based on the mass of the steel sheet, the contents of the inevitable impurity elements in percentages by mass are as follows: H ≤ 0.0002%, O ≤ 0.003%, N ≤ 0.004%, B ≤ 0.0005%, As ≤ 0.007%, Sb ≤ 0.010%, Sn ≤ 0.020%, Pb ≤ 0.010%, Bi ≤ 0.010%.

The rationale for the selection of the chemical components in the corrosion-resistant high-strength steel sheet for high heat input welding in marine engineering provided in the present application is presented below:

Ti: Ti is capable of forming carbides, nitrides or carbonitrides with C and N, thus inhibiting the excessive growth of austenite grains during slab heating and manufacturing, thereby exerting an exceptional grain refining effect, so that the low-temperature toughness of steel sheet can be improved. More importantly, this element can inhibit the growth of the grains present in the heat affected zone during welding to improve the toughness of the heat affected zone; however, large-sized TiNs are likely to be formed to invalidate its grain refining effect if an excessive amount of this element is added. Upon comprehensively considering the alloy cost and the performance of the steel sheet, the content of Ti is controlled at 0.005%-0.015% in the present application.

Cu: this element provides highly potent solution strengthening effect to stimulate the formation and stabilization of austenite. Cu in an appropriate amount can improve strength without compromising low-temperature roughness, and better corrosion-resistant performance. The Cu in the present application strengthens precipitation in the subsequent cooling process to counterbalance the strength loss due to oversized central structures. The content of Cu is maintained at a level no less than 0.20% to ensure its beneficial effect above. However, hot embrittlement will be caused during heating to deteriorate surface quality, jeopardize the base material and low-temperature toughness of the heat affected zone if the content of Cu is used in excess. Therefore, the content of Cu is controlled at 0.20%-0.50%.

Ni: this element is capable of stimulating the formation and stabilization of austenite, inhibiting recrystallization of the austenite and refining the grain size, therefore, Ni provides the combined function of improving the strength, ductility and low-temperature roughness of the steel sheet; addition of Ni in steel also reduces the occurrence of copper brittleness and inter-grain cracking during hot rolling; furthermore, Ni facilitates the formation of densely spread protective rusty layer on the steel surface to increase its resistance to corrosion. Therefore, from a theoretical perspective, a higher Ni content in the steel within a certain range is equivalent to a better result. However, excessive Ni content produces a hardening effect on the heat affected zone, thus adversely affecting the weldability of the steel sheet. Therefore, the content of Ni is controlled at 0.40%-0.70% in the present application.

Als: Al in steel immobilizes the free N in steel and improves the low-temperature toughness of the steel sheet and welded HAZ; besides, the dispersive precipitation of AlN suppresses the growth of austenite grains during heating, refine the particle size of austenite grain in a uniform manner and increases toughness against impact. In addition, Al provides excellent resistance to oxidization and corrosion; however, an excessive Al content will lead to increased presence of inclusions in steel, and increased size in the inclusions further causes a decline in the internal quality of the steel sheet, which will compromise the steel's performances in thermal working, welding and profiling. Therefore, the content of Als is controlled at 0.06%-0.09% in the present application.

N: this element in excessive amount will cause precipitation of large-sized TiN and AlN in the original austenite grain boundary, causing a detrimental effect on the toughness against impact and plasticity of the steel sheet and the welding heat affected zone. In the meantime, N atoms tend to accumulate in the defect sites in steel to form pores and porosity, thus further deteriorating the mechanical property of steel sheet. Therefore, the content of N is controlled at <0.004% in the present application, considering the fact that the complete removal of N in steel is not possible.

B: this element in excessive amount tends to accumulate at the grain boundary in the steel sheet to decrease energy at the grain boundary, causing the steel sheet to form a low-temperature phase transformation structure in the cooling process, thus reducing the low-temperature impact performance and fatigue performance of the steel sheet. Therefore, the content of B is controlled at <0.0005% in the present application.

O: residual presence of this element in the ingot blank or dispersion into the surface layer renders the grain boundary susceptible to oxidization and form brittle oxide interlayer to isolate the austenite grain so that inter-grain cracking is caused in the subsequent deformation processing, thus resulting in significant reduction in the strength and plasticity of the steel sheet, so the content of O should be controlled to the maximum extent possible. The amount of inclusions in steel must be minimized to ensure the plasticity and low-temperature strength of the steel sheet, among which aluminum oxide poses the maximum detriment. Therefore, the content of O in steel is controlled at <0.003%.

H: the presence of element H in steel causes white spots, and therefore, the content of H is controlled at <0.0002%.

CEV: proper control of carbon equivalent indicator is helpful to ensure the strength and weldability of steel sheet, and the content of CEV is controlled at ≤ 0.40% in the present application.

Pcm: proper control of cold cracking susceptibility coefficient is helpful to ensure the welding performance of the product, and the Pcm is controlled at ≤ 0.23% in the present application.

The present application provides a method of preparation for a corrosion-resistant high-strength steel sheet for high heat input welding in marine engineering, which includes the following steps:

1) smelting and casting: Molten iron and scrap steel are smelted to obtain molten steel, then the molten steel obtained is refined and subjected to casting to generate ingot blank, followed by slow cooling performed on the ingot blank;

2) slab heating: the ingot blank subjected to slow cooling is heated to obtain warm ingot blank;

3) rolling: The warm ingot blank is subjected to rolling to obtain steel sheet;

4) cooling: The steel sheet is subjected to cooling treatment to obtain the corrosion-resistant high-strength steel sheet for high heat input welding in marine engineering.

For the above corrosion-resistant high-strength steel sheet for high heat input welding in marine engineering, as a preferred embodiment, in the step 1), the refining is performed by LF (Ladle Furnace) + RH (Ruhrstahl Heraeus); preferably, during LF refining, mixing is performed by blowing argon from the bottom throughout the process, and deoxidation is achieved with aluminum particles and calcium carbide; the top slag is yellowish white or white in color before being discharged from the furnace, with a residence time of not less than 10 min, and the alkalinity of final slag is controlled above 2.5; preferably, during LF refining, metal manganese and ferrosilicon alloy are used for fine-tuning the composition; preferably, during the RH refining, degassing is performed for not less than 5 min; at the end of RH refining, Ca-Al wire measuring 100-150 m (for example, 110 m, 120 m, 130 m and 140 m) in length is fed into each furnace and soft blowing is performed for at least 12 min.

For the above corrosion-resistant high-strength steel sheet for high heat input welding in marine engineering, as a preferred embodiment, in the step 1), protective casting is maintained throughout the casting process; the liquidus temperature for this steel is 1514-1524°C (for example, 1516°C, 1518°C, 1520°C and 1522°C), and the degree of superheat is required to be lower than 25°C. Soft reduction process is used at the solidification end of the ingot blank in the sector section, and the ingot blank is slowly cooled in the slow cooling pit for not less than 60 hours, so as to fully reduce the structural stress and thermal stress generated by the ingot blank during the cooling process.

For the above corrosion-resistant high-strength steel sheet for high heat input welding in marine engineering, as a preferred embodiment, in the step 2), heating is performed at ≥ 9 min/cm, and homogenous heating is achieved by multiple heating stages on the ingot blank: a first heating section at a temperature of 1020-1140°C, a second heating section at a temperature of 1100-1190°C, and a soaking section at a temperature of 1110-1170°C for a duration of not less than 40 min; a temperature of 1110-1150°C (for example, 1120°C, 1130°C and 1140°C) is achieved for the ingot blank when it is being discharged from the furnace. After being discharged from the furnace, the scales on the heated ingot blank were removed with high pressure water.

For the above corrosion-resistant high-strength steel sheet for high heat input welding in marine engineering, as a preferred embodiment, in the step 3), the rolling is a two-stage process of rough rolling and precision rolling, in which the rough rolling is recrystallization rolling, while the precision rolling is non-recrystallization rolling; preferably, in the rough rolling stage, the deformation through at least two passes is ensured to be ≥ 20%, and the grains are refined by large reduction; preferably, the initial rolling temperature in the precision rolling stage is 825-855°C (for example, 830°C, 835°C, 840°C, 845°C and 850°C), and deformation through at least 3 passes should be performed within a temperature range of 790-760°C (for example, 785°C, 780°C, 775°C, 770°C and 765°C) in the precision rolling stage; the cumulative deformation through the 3 passes is ≥ 20%, so as to facilitate the centrally oriented deformation and refine the ferrite.

For the above corrosion-resistant high-strength steel sheet for high heat input welding in marine engineering, as a preferred embodiment, in the step 4), cooling is performed at a rate of 10-15°C/s (for example, 11°C/s, 12°C/s, 13°C/s and 14°C/s) to increase the nucleation rate of ferrite and form finely dispersed precipitates, so that the strength and toughness of steel can be further improved. The self-tempering temperature is maintained at 500°C-550°C (510°C, 520°C, 530°C, 540°C).

The present application provides the following advantages compared with the currently available technologies:

1) in the present application, addition of heavy metals such as Mo and Cr in large quantities is not required. The element of Mn is used for solution strengthening, which allows for the sufficient exertion of the solution strengthening and precipitation strengthening functions of Ni and Cu to obtain uniformly distributed fine mixture structures of pearlite +ferrite. Thus, excellent strength, plasticity and low-temperature toughness are obtained by use of alloy in small amounts that not only reduces alloy cost and production cost, but also improves the welding performance of steel sheet. In the meantime, Ni and Cu can induce the effective formation of dense and high-attachment protective rust layer on the steel for use in marine engineering, thereby efficiently precluding the penetration of corrosive medium such as $H_2O$, $O_2$ and $Cl^-$ into the basal steel, resulting in corrosion-resistant performance of the steel sheet;

2) in the present application, highly conforming raw materials for ingot blank are provided through well-designed stringent control over the component, purity and gas content in the steelmaking process. Homogenous heating conducted in multiple heating stages is used for the ingot blank within the heating furnace, and the ingot blank is controlled at an appropriate temperature at its discharge from the furnace to ensure thorough heating, sufficient austenization, absence of grain coarsening and ample solid solution of each individual alloying element, so as to create optimized conditions for subsequent rolling process;

3) in the present application, TMCP thermo-mechanical control is used for the rolling and rapid cooling processes, thus eliminating the need for complex quenching and tempering treatment. Refining of grains by large reduction in the rough rolling stage, controlled rolling on the non-recrystallization zone in the precision rolling stage and rolling process ensured for at least 3 passes under low temperature and large reduction together allow the deformation to be distributed centrally, refine the ferrite and generate substantial dislocation for effective prevention of grain growth, thus improving the performance. Cooling under laminar flow is performed after rolling, and the self-tempering temperature is controlled upon completion of controlled cooling to increase the nucleation rate of the ferrite and form finely dispersed precipitates, thereby further improving the strength and toughness of steel.

In the present application, sufficient control over the phase change process is achieved via rationally designed process to obtain a steel sheet for use in marine engineering (thickness: 40-60 mm, yield strength: ≥355MPa, tensile strength: 490-630 MPa, $KV_2$ (-40°C)≥47 J for HAZ after exposure to high heat input welding at 160-210 kJ/cm, which delivers excellent low-temperature impact toughness, significantly increased resistance to seawater corrosion by≥35% compared with conventional steel for marine engineering. The steel sheet produced exhibits high strength, superior corrosion resistance, compatibility with high heat input welding and low cost in production etc.

## DETAILED DESCRIPTION

A corrosion-resistant high-strength steel sheet for high heat input welding in marine engineering and a preparation method therefor are further described in detail in combination with the following detailed embodiments, and these embodiments are presented only for the explanatory purpose. The present application are not limited to these embodiments provided.

In the embodiments of the present application, a corrosion-resistant high-strength steel sheet for high heat input welding in marine engineering and its method of preparation thereof is provided. The chemical composition calculated on a weight percentage basis is as follows: C: 0.06%-0.09%, Si: 0.15%-0.30%, Mn: 1.45%-1.60%, P: ≤ 0.012%, S: ≤ 0.003%, Ni: 0.40%-0.70%, Cu: 0.20%-0.50%, Ti: 0.005%-0.015%, Als: 0.06%-0.09%, with the balance being Fe and other inevitable impurity elements. In the present application, low C+Ni and Cu alloying design is used, and rolling via TMCP thermo-mechanical control plus rapid cooling processes are executed to obtain high-strength, corrosion-resistant, low-cost steel for use in marine engineering that allows for high heat input welding. The impact toughness of the welding heat affected zone of the steel is ≥47 J at -40°C following high heat input welding within 160-210 kJ/cm. The steel also provides excellent low-temperature impact toughness, significantly increased resistance to seawater corrosion by≥35% compared with conventional steel for marine engineering.

In the present application, a preparation method for the above steel sheet is provided, including the steps of smelting, continuous casting, slab heating, rolling, and cooling.

For smelting, all the materials fed into the furnace are required to comply with established process requirements in that the molten iron in the blast furnace is desulfurized by KR pretreatment, and the sulfur content of the molten iron in the furnace is ≤ 0.015%. After desulfurization, the residual slag present on the surface of the molten iron is fully removed. The molten iron should be accurately measured, and the charging quantity should be strictly controlled, with an error of 2 tons. Nickel sheets and copper sheets are added with scrap steel; using one-time carbon turndown, the slag charge is added 3 minutes before the end point; smelting is done by using a dual deep dephosphorization in slag, and the alkalinity of final slag is controlled at R = 3.0-4.0; the steel is discharged within not less than 3 min while shielding the slag to prevent substantial slag carryover; for each ton of steel, 3.5-4.0 kg of Al-Mn-Fe is used for deoxidation, when the molten steel is generated to a quarter of the furnace, manganese and ferrosilicon alloy are added in batches, which are completely added when the molten steel is generated to three quarters of the furnace; during LF refining, mixing is performed by blowing argon from the bottom throughout the process, molten steel should not be exposed to air throughout smelting to prevent secondary oxidization, and aluminum particles and calcium carbide are used for deoxidation; the top slag must be yellowish white or white in color before being discharged from the furnace, with a residence time of not less than 10 min, and the alkalinity of final slag should be controlled above 2.5; metal manganese and ferrosilicon alloy are used for fine-tuning the composition to ensure that the composition meets the internal control; the duration of LF refining should not be less than 45 min; chemical heating should be avoided during RH refining and pure degassing should be maintained for more than 5 min; at the end of RH refining, Ca-Al wire measuring 100-150 m in length is fed into each furnace and soft blowing is performed for at least 12 min; smelting cycle for RH is controlled at 40-60 min.

Continuous casting is performed under proper protection throughout the process. The liquidus temperature is calculated as 1519°C according to the composition limit defined in the intermediate specification, and the degree of superheat is required to be lower than 25°C. Soft reduction process is used at the solidification end of the ingot blank in the sector section, and the ingot blank is slowly cooled for not less than 60 h, so as to fully reduce the structural stress and thermal stress of the ingot blank during the cooling process. The pulling rates of section thickness for 175-mm ingot blank, 200-mm ingot blank, 250-mm ingot blank and 300-mm ingot blank are controlled at 1.0-1.3 m/min, 1.0-1.4 m/min, 1.0-1.3 m/min and 0.7-0 .9 m/min, respectively.

Slab heating is performed by transferring the slab obtained from continuous casting into the heating furnace under a cold status; the heating is performed at a rate ≥ 9 min/cm, and homogenous heating is conducted in multiple staged on the ingot blank for not less than 40 min, during which temperature difference among various points of the steel slab is not more than 20°C, and the ingot blank is discharged from the furnace at a temperature of 1110-1150°C; the heated ingot blank is then subjected to scale removal process using water under high pressure after discharge from the heating furnace.

Rolling is divided into rough rolling and precision rolling, in which the former is performed via recrystallization and the latter is performed via non-recrystallization; in the rough rolling stage, the deformation through at least two passes is ensured to be ≥ 20%, and the grains are refined by large reduction; in the precision rolling stage, deformation through at least 3 passes should be ensured to be performed within a temperature range of 790-760°C, and the cumulative deformation through the 3 passes is ≥ 20%, so as to facilitate the centrally oriented deformation and refine the ferrite.

Cooling is performed at a rate of 10-15°C/s to increase the nucleation rate of ferrite and form finely dispersed precipitates, thus further improving the strength and toughness of the steel; the self-tempering temperature is 500-550°C; the steel is transferred into the slow cooling pit and stacked as soon as possible after rolling to subject to slow cooling for not less than 48 h.

Embodiment 1: Steel sheet with a thickness of 50 mm

In the present application, a corrosion-resistant high-strength steel sheet for high heat input welding in marine engineering is provided; its chemical composition and content on a weight percentage basis are as follows: C: 0.085%, Si: 0.19%, Mn: 1.47%, P: 0.0086%, S: 0.0014%, Ni: 0.50%, Cu: 0.35%, Ti: 0.010%, Als: 0.064%, with the balance being Fe and other inevitable impurities (CEV=0.39%, Pcm=0.19%).

The slab is discharged from the furnace at a temperature of 1140°C; the initial rolling temperature is 834°C in the precision rolling stage and the final 3-pass deformation is performed within a temperature range of 775°C-763°C for the precision rolling stage, with a cumulative deformation of 22.08%, and the self-tempering temperature is 550°C.

Embodiment 2: Steel sheet with a thickness of 50 mm

In the present application, a corrosion-resistant high-strength steel sheet for high heat input welding in marine engineering is provided; its chemical composition and content on a weight percentage basis are as follows: C: 0.080%, Si: 0.18%, Mn: 1.48%, P: 0.009%, S: 0.0016%, Ni: 0.55%, Cu: 0.37%, Ti: 0.010%, Als: 0.062%, with the balance being Fe and other inevitable impurities (CEV=0.39%, Pcm=0.19%).

The slab is discharged from the furnace at a temperature of 1150°C; the initial rolling temperature is 825°C in the precision rolling stage and the final 3-pass deformation is performed within a temperature range of 781°C-769°C for the precision rolling stage, with a cumulative deformation of 22.65%, and the self-tempering temperature is 523°C.

The steel sheet performance and welded joint performance in each embodiment presented in the present application are shown in Table 1; the results obtained with the steel sheet in the embodiments subjected to soaking for 7 days in laboratory simulated seawater (3.5% NaCl solution) at a test temperature of (30±2)°C are shown in Table 2, in which the chemical composition of conventional steel EH36 on a weight percentage basis are as follows: C: 0.14%, Si: 0.30%, Mn: 1.25%, P: 0.015%, S: 0.003%, Nb: 0.020%, Al: 0.037%, and Ti: 0.015%.

Table 1 Embodiment of the present application and post-welding performance

| No. | Base metal | | | | Welding heat input (kJ/cm) | Welded joint | | |
|---|---|---|---|---|---|---|---|---|
| | Thick ness (mm) | Yield Strength (MPa) | Tensile strength (MPa) | Percent age elongat ion after fractur e (%) | | Tensile strength (MPa) | Weld seam-40°C Impact energy (J) | HAZ-40°C Impact energy (J) |
| Embodi ment 1 | 50 | 445 | 543 | 27.0 | 160 | 531 | 115 | 81 |
| Embodi ment 2 | 50 | 443 | 537 | 29.5 | 210 | 502 | 98 | 63 |

Table 2 Corrosion rate after soaking the steel in the embodiment of the present application

| | Embodiment 1 | Embodiment 2 | Conventional EH36 |
|---|---|---|---|
| Average corrosion rate (mm/a) | 0.132 | 0.128 | 0.206 |
| Relative corrosion rate | 64.1% | 62.1% | 100% |

It can be seen from the table above that the steel sheet provided in the present application provides uncompromised low-temperature roughness after exposure to high heat input welding at 160-210 kJ/cm, thus creating beneficial conditions for efficient welding of steel sheets; furthermore, its resistance to seawater corrosion is increased by at least 35% compared to conventional steel for use in marine engineering, representing significant improvement in terms of service life and safety.

In summary, the corrosion-resistant high-strength steel sheet for high heat input welding in marine engineering provided in the present application not only exhibits superior overall performances in terms of strength, corrosion resistance and compatibility with high heat input welding, but also reduces cost in its production process, involves simple process, and shows promising prospects in promoting its application.

Conventional technical expertise may be used for aspects not detailed in the present application.

Finally, it should be noted that the abovementioned embodiments are presented only for explaining the technical scheme of the present application, rather than restrictive. Though detailed description of the present application is provided with reference to the embodiments, however, those skilled in the art will recognize that, the content of the present application enables those skilled in the art to make changes to or execute equivalent replacements for the disclosed technical scheme in the present application without departing from the spirit and scope of the technical scheme involved in the present application, which should be covered in the claims of the present application.

## Claims

1.  A corrosion-resistant high-strength steel sheet for high heat input welding in marine engineering, wherein, the chemical composition of the steel sheet in percentages by mass is as follows: C: 0.06%-0.09%, Si: 0.15%-0.30%, Mn: 1.45%-1.60%, P: ≤ 0.012%, S: ≤ 0.003%, Ni: 0.40%-0.70%, Cu: 0.20%-0.50%, Ti: 0.005%-0.015%, and Als: 0.06%-0.09%, with the balance being Fe and inevitable impurity elements.

2.  The corrosion-resistant high-strength steel sheet for high heat input welding in marine engineering according to claim 1, wherein, CEV is less than or equal to 0.40% and Pcm is less than or equal to 0.23% in the steel sheet.

3.  The corrosion-resistant high-strength steel sheet for high heat input welding in marine engineering according to claim 1, wherein, the content of each of the inevitable impurity elements in percentages by mass is as follows: H ≤ 0.0002%, O ≤ 0.003%, N ≤ 0.004%, B ≤ 0.0005%, As ≤ 0.007%, Sb ≤ 0.010%, Sn ≤ 0.020%, Pb ≤ 0.010%, and Bi ≤ 0.010%.

4.  The corrosion-resistant high-strength steel sheet for high heat input welding in marine engineering according to any one of claims 1-3, wherein, the steel sheet has a thickness of 40-60 mm, a yield strength of ≥ 355 MPa, a tensile strength of 490-630 MPa, and a $KV_2$ of ≥ 47 J at -40°C for the HAZ after high heat input welding at 160-210 kJ/cm.

5. A method for preparing the corrosion-resistant high-strength steel sheet for high heat input welding in marine engineering according to any one of claims 1-4, comprising the following steps:

1) smelting and casting: primary smelting of molten iron and scrap steel to obtain primary molten steel, which is subjected to refining and casting to obtain ingot blank, followed by slow cooling on the ingot blank;
2) slab heating: heating the ingot blank after slow cooling to obtain heated ingot blank, during which the ingot blank is heated homogeneously through multiple heating stages for not less than 40 min, and the slab is discharged from a furnace at a temperature of 1110°C-1150°C;
3) rolling: rolling the heated ingot blank to obtain steel sheet, wherein the rolling is a two-stage controlled rolling of rough rolling and precision rolling; the rough rolling is rolling in recrystallization zone and the precision rolling is rolling in non-recrystallization zone;
4) cooling: cooling the steel sheet to obtain corrosion-resistant high-strength steel sheet for high heat input welding in marine engineering.

6. The preparation method according to claim 5, wherein, in the step 1), refining is performed by LF + RH; wherein,

during LF refining, mixing is performed by blowing argon from the bottom throughout the process, and deoxidation is achieved with aluminum particles and calcium carbide; the top slag is yellowish white or white in color before being discharged from the furnace, with a residence time of not less than 10 min, and the alkalinity of final slag is controlled above 2.5; during LF refining, metal manganese and/or ferrosilicon alloy are used for fine-tuning the composition;
during RH refining, degassing is performed for not less than 5 min; at the end of RH refining, Ca-Al wire measuring 100-150 m in length is fed into each furnace and soft blowing is performed for at least 12 min.

7. The preparation method according to claim 5, wherein, in the step 1), protective casting is maintained throughout the casting process; the liquidus temperature is 1514-1524°C, and the degree of superheat is lower than 25°C; soft reduction process is used at the solidification end of the ingot blank in the sector section, and the ingot blank is slowly cooled in the slow cooling pit for not less than 60 hours in stacks.

8. The preparation method according to claim 5, wherein, in the step 2), heating is performed at $\geq$ 9 min/cm, and the heating in multiple stages comprises a first heating section at a temperature of 1020-1140°C, a second heating section at a temperature of 1100-1190°C, and a soaking section at a temperature of 1110-1170°C.

9. The preparation method according to claim 5, wherein, in the step 3), in the rough rolling stage, the deformation through at least two passes is ensured to be $\geq$ 20%; the initial rolling temperature in the precision rolling stage is at 825-855°C, and deformation through at least 3 passes is ensured to be performed within a temperature range of 790-760°C, with a cumulative deformation through the 3 passes being $\geq$ 20%.

10. The preparation method according to claim 5, wherein, in the step 4), the self-tempering temperature is 500-550°C and the cooling rate is 10-15°C/s.

## INTERNATIONAL SEARCH REPORT

| International application No. |
| --- |
| **PCT/CN2022/092985** |

**A. CLASSIFICATION OF SUBJECT MATTER**

C22C 38/02(2006.01)i; C22C 38/04(2006.01)i; C22C 38/08(2006.01)i; C22C 38/16(2006.01)i; C22C 38/14(2006.01)i; C22C 38/06(2006.01)i; C21D 8/02(2006.01)i; C21C 7/06(2006.01)i; C21C 7/00(2006.01)i; C21C 7/10(2006.01)i

According to International Patent Classification (IPC) or to both national classification and IPC

**B. FIELDS SEARCHED**

Minimum documentation searched (classification system followed by classification symbols)

C22C; C21D; C21C

Documentation searched other than minimum documentation to the extent that such documents are included in the fields searched

Electronic data base consulted during the international search (name of data base and, where practicable, search terms used)

CNTXT, DWPI, CNKI, CNABS: 耐腐蚀, 焊接, 海洋, 工程, 强度, 钢, 镍, 铜, 钛, 冶炼, 浇铸, 加热, 轧制, 冷却, corrosion resistance, welding, marine, engineering, strength, steel, nickel, copper, titanium, smelting, casting, heating, rolling, cooling

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114277314 A (LAIWU STEEL GROUP YINSHAN SECTION STEEL CO., LTD. et al.) 05 April 2022 (2022-04-05)<br>    claims 1-10 | 1-10 |
| X | CN 112048665 A (LAIWU STEEL GROUP YINSHAN SECTION STEEL CO., LTD.) 08 December 2020 (2020-12-08)<br>    description, paragraphs 10-46 | 1-10 |
| X | CN 101921953 A (HUNAN VALIN XIANGTAN IRON AND STEEL CO., LTD.) 22 December 2010 (2010-12-22)<br>    description, paragraphs 4-10 | 1-10 |
| A | WO 2021196821 A1 (JIANGYIN XINGCHENG SPECIAL STEEL WORKS CO., LTD.) 07 October 2021 (2021-10-07)<br>    entire document | 1-10 |

☐ Further documents are listed in the continuation of Box C.    ☑ See patent family annex.

| * | Special categories of cited documents: | |
| --- | --- | --- |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **09 August 2022** | **15 August 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/092985**

| Patent document cited in search report | | | Publication date (day/month/year) | Patent family member(s) | | | Publication date (day/month/year) |
|---|---|---|---|---|---|---|---|
| CN | 114277314 | A | 05 April 2022 | None | | | |
| CN | 112048665 | A | 08 December 2020 | None | | | |
| CN | 101921953 | A | 22 December 2010 | None | | | |
| WO | 2021196821 | A1 | 07 October 2021 | CN | 111455255 | A | 28 July 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111462807
- CN 102839320 A
- CN 105256095 A
- CN 102839330 A
- CN 102286692 A
- CN 111926259 A